(19) **Europäisches Patentamt / European Patent Office / Office européen des brevets**

(11) **EP 4 701 066 A1**

(12) **EUROPÄISCHE PATENTANMELDUNG**

(43) Veröffentlichungstag:
25.02.2026 Patentblatt 2026/09

(21) Anmeldenummer: 24195580.6

(22) Anmeldetag: 21.08.2024

(51) Internationale Patentklassifikation (IPC):
H02M 7/5387 (2007.01)    H02M 7/5395 (2006.01)
H02M 1/00 (2006.01)      H02M 1/32 (2007.01)
H02P 27/08 (2006.01)     H02P 29/028 (2016.01)

(52) Gemeinsame Patentklassifikation (CPC):
H02M 7/5395; H02M 1/0012; H02M 1/32;
H02M 7/5387; H02P 27/08; H02P 29/028

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder:
• **Siemens Aktiengesellschaft**
  **80333 München (DE)**
• **Karlsruher Institut für Technologie**
  **76131 Karlsruhe (DE)**

(72) Erfinder:
• **Schmitz-Rode, Benedikt**
  **76185 Karlsruhe (DE)**
• **Krug, Dietmar**
  **90425 Nürnberg (DE)**
• **Tsotoulidis, Savvas**
  **35132 Lamia (GR)**

(74) Vertreter: **Siemens Patent Attorneys**
**Postfach 22 16 34**
**80506 München (DE)**

(54) **VERBESSERTES DATENBASIERTES CONDITION MONITORING DURCH BEEINFLUSSUNG DER AUSGANGSSPANNUNGSMODULATION**

(57) Die Erfindung betrifft ein Computer-implementiertes Verfahren, eine Computer-implementierte Vorrichtung, ein System und ein Computerprogrammprodukt zum Bestimmen eines Degradationsfortschritts eines Stromrichters mit einer Drehstrombrückenschaltung umfassend eine positive Halbbrücke und eine negative Halbbrücke mit je einem Halbleiterchip umfassend Bestimmen einer ersten Nullspannung zum Zuführen an den Stromrichter, wobei die Nullspannung mit einer Verlängerung einer Leitzeit des zumindest einen Halbleiterchips assoziiert ist, Zuführen der ersten Nullspannung an den Stromrichter, Erfassen eines ersten zeitlichen Verlaufs einer Ausgangsspannung und/oder eines Ausgangsstroms des Stromrichters, wobei die Ausgangsspannung und/oder der Ausgangsstrom zum Zuführen an ein elektrisches Antriebsmittel bestimmt ist, Bestimmen einer Differenz zwischen einem von dem zeitlichen Verlauf abgeleiteten Wert mit einem Referenzwert, Bestimmen einer Regelspannung eines Reglers zum Zuführen an den Stromrichter, um die bestimmte Differenz zu minimieren, und Bestimmen des Degradationsfortschritts zumindest teilweise basierend auf einem Vergleichen der Regelspannung mit einer Referenzregelspannung.

FIG 7B

Phasenspannungen mit additiver Nullkomponente

EP 4 701 066 A1

**Beschreibung**

Die vorliegende Erfindung betrifft ein Computer-implementiertes Verfahren, eine Computer-implementierte Vorrichtung, ein System sowie ein Computerprogrammprodukt zum Bestimmen eines Degradationsfortschritts eines Stromrichters.

Elektrische Bauteile unterliegen im Allgemeinen einem Alterungsprozess. Diese können z.B. durch wiederholtes Erwärmen und Abkühlen der betreffenden Bauteile im Regelbetrieb verursacht werden, durch im Material der elektrischen Bauteile vorhandene Materialdefekte, etc. Dies Alterungsprozess führt zu einer in der Regel begrenzten Lebenszeit der betreffenden Bauteile, welche folglich nach einer gewissen Einsatzzeit ausgetauscht werden müssen.

Die verbleibende Lebenszeit von Komponenten in einem zuvor genannten System (z.B. in einem Stromrichter) kann für einen Anlagenbetreiber häufig schwer zu ermitteln sein. Das Bestimmen einer zu verbleibenden Lebenszeit kann sowohl für einen Hersteller des jeweiligen elektrischen Bauteils als auch für einen Systemadministrator, welcher für eine Implementierung des jeweiligen elektrischen Bauteils zuständig ist, eine Herausforderung darstellen. Hersteller führen diesbezüglich häufig offline Berechnungen durch, um eine zu erwartete Lebenszeit eines Bauteils (z.B. eines Leistungswandlers) zu schätzen und führen diese dann in ihren Dokumentationen auf. Diese Berechnungen basieren meist auf Lastprofilen und Produktnutzung, wie sie über einen idealen Produktzyklus hinweg auftreten kann, während typische Randbedingungen in Betracht gezogen werden, wie z.B. Temperatur, Feuchtigkeit, Höhe, etc.

Die Ermittlung der verbleibenden Lebenszeit kann z.B. durch eine regelmäßige Wartung der betreffenden Komponenten erfolgen. In einem derartigen Fall können z.B. zwei Wartungsstrategien in Frage kommen. Es ist ggf. möglich, basierend auf den bekannten Lastprofilen und spezifizierten Umgebungsbedingungen Wartungsintervalle festzulegen, zu deren Zeitpunkten die zu wartenden Komponenten mit hoher Wahrscheinlichkeit noch funktionstüchtig sind. Die Wahl dieser Wartungsintervalle kann jedoch häufig dazu führen, dass Komponenten mit ggf. noch beträchtlicher verbliebener Lebenszeit ausgetauscht werden, was zu (unnötig) hohen Kosten und Materialeinsatz führen kann.

Als weitere Wartungsstrategie, falls Stillstandzeiten des elektrischen Systems in Kauf genommen werden können, kann auch ein Austausch der betreffenden Komponente erfolgen, genau dann, wenn diese auch tatsächlich ausgefallen ist. Dies kann zwar die mit einem zu frühen Austausch verbundenen (unnötigen) Kosten verringern, jedoch kann demgegenüber ein unerwarteter Stillstand des elektrischen Systems erfolgen und dadurch z.B. eine Produktionslinie stilllegen. Je nach dadurch aufgetretenem Defekt kann dies zu unerwartet hohen Kosten führen. Die Auswahl, der für die betreffende Anlage und Applikation optimierten Wartungsintervalle kann zu einer globalen Kostenreduktion und zu einer Minimierung der Stillstandzeit des elektrischen Systems führen.

Durch den Einsatz sog. Condition Monitoring Verfahren kann der Zeitpunkt, wann eine Wartung des elektrischen Systems durchgeführt werden soll, optimiert werden, indem die verbliebene Lebenszeit der elektrischen Komponenten bzw. ein Fortschritt eines aktuellen Degradationsprozesses ermittelt wird.

Allgemein kann das Condition Monitoring in drei unterschiedliche Klassen von Ansätzen unterteilt werden: Im Rahmen der sensorbasierten Condition Monitoring Systeme kann zusätzliche/dedizierte Sensorik und/oder komplexe Messschaltungen verwendet werden, um direkt Größen eines elektrischen Systems zu messen, welche Rückschlüsse auf einen aktuellen Degradationsfortschritt elektrischer Komponenten ermöglichen. Die Komplexität und auch die Implementierungskosten eines derartigen Systems können dabei deutlich steigen. Unterschieden werden kann weiter zwischen Messsystemen, die online im Betrieb eines Stromrichtersystems eingesetzt werden und externer Prüftechnik, die lediglich in festgelegten (vorbestimmten) Intervallen zur Messung verwendet wird.

Im Rahmen modellbasierter Condition Monitoring Systeme wird versucht, einige der vorstehend genannten Probleme zumindest teilweise durch Modellbildung zu überwinden. In diesen Modellen wird der Alterungsvorgang physikalisch oder stochastisch implementiert. Das Modell wird anschließend online im Betrieb mit Lastprofilen und Umgebungsbedingungen als Eingangsvariablen betrieben. Das Ergebnis kann eine stochastische Bewertung der verbliebenen Lebenszeit bzw. des aktuellen Schweregrads der Schädigung sein. Trotz des Wegfalls zusätzlicher Messschaltungen besteht die Herausforderung dennoch in einem Modellaufbau mit ausreichender Güte.

Datenbasierte Condition Monitoring Systeme können derart eingerichtet sein, aus bestehenden Mess- und Zustandsgrößen Muster, die Rückschlüsse auf die Änderung eines Degradationsindikators ermöglichen und damit Rückschlüsse auf eine eingetretene Alterung ermöglichen. Hierbei kann der Informationsgehalt von verschiedenen möglichen Messsignalen und Zustandsgrößen analysiert werden sowie auf Möglichkeiten der Signalverarbeitung zurückgegriffen werden. Dies kann basierend auf statistischen Methoden erfolgen oder basierend auf Methoden der künstlichen Intelligenz.

Bekannte Condition Monitoring Verfahren ermöglichen jedoch noch nicht unter allen Umständen eine zufriedenstellende Bestimmung eines Degradationsfortschritts, da diese zu komplexe Hardware, eine zu komplexe Modellbildung oder eine aufwendige Datenanalyse erfordern. In einigen Fällen, sind derzeit verwendete Condition Monitoring Verfahren für den Feldeinsatz schlicht zu ungenau.

Es kann möglich sein, das Condition Monitoring eines Stromrichters, z.B. bei Vorliegen eines (elektrischen) Antriebs auf das Erfassen von mechanischen Vibrationen und/oder elektrischer Signale, welche mit dem Betrieb des Antriebs assoziiert sind, zu basieren. Eine Möglichkeit in diesem Zusammenhang kann der Rückgriff auf eine motor current signature analysis (MCSA) sein, welche z.B. angewendet wird, um mechanische Fehler eines Antriebs zu identifizieren, wie z.B. eine Fehlausrichtung, Ungleichgewicht, lockere Füße des Motors, Kavitationseffekte (z.B. bei Pumpen) etc. Dies stützt sich jedoch im Wesentlichen auf die Auswertung mechanischer Parameter und kann daher nicht in allen Fällen eine erwünschte Vorhersagegenauigkeit sicherstellen.

Im Fall des datenbasierten Condition Monitorings können Testsignale in einen Ausgangsstrom eines Stromrichters eingeregelt bzw. aufaddiert werden, welcher z.B. als Eingangsstrom für eine nachfolgend zu dem Stromrichter angeordnete elektrische Maschine dienen kann. Alternativ kann es auch möglich sein, eine an die elektrische Maschine bereitzustellende Sollspannung so zu wählen, dass diese als Testsignal fungieren kann (zusätzlich oder alternativ kann es auch möglich sein, ein Testsignal in einen Sollstrom einzuprägen). Auf diese Weise kann z.B. ein Condition Monitoring für Betriebspunkte (z.B. eines Stromrichters) ermöglicht werden, bei denen ansonsten keine Bestimmung (z.B. eines Alterungsprozesses des Stromrichters) möglich wäre. Diese Art des Condition Monitorings erfordert jedoch die gezielte Einspeisung eines optimierten Testsignals, was zu einem komplexeren Condition Monitoring beiträgt und nicht in allen Anwendungsfällen eine gewünschte Genauigkeit des Condition Monitorings ermöglicht.

Die Addition einer Spannungsnullkomponente zur Ausgangssollspannung kann in einigen Fällen dazu genutzt werden den Ansteuerbereich verketteter Spannungen zu erhöhen (z.B. durch Aufmodulieren einer dritten Harmonischen), d.h. durch Addition einer Spannungsnullkomponente kann so z.B. die Bandbreite der erzielbaren Spannung (bzw. des erzielbaren Stroms) erhöht werden. Dies alleine, ermöglicht jedoch noch kein zufriedenstellendes Condition Monitoring.

Es besteht daher ein Bedarf ein verbessertes Condition Monitoring Verfahren bereitzustellen, welches die Nachteile und Einschränkungen derzeit verwendeter Condition Monitoring Verfahren zumindest teilweise überwindet.

Die vorliegende Erfindung stellt sich daher die technische Aufgabe ein verbessertes und leicht bzw. kostengünstig zu implementierendes Condition Monitoring Verfahren bereitzustellen, welches insbesondere zu einer Verbesserung der Genauigkeit des Condition Monitorings beitragen kann.

Gemäß einem ersten Aspekt der vorliegenden Erfindung wird ein Computer-implementiertes Verfahren zum Bestimmen eines Degradationsfortschritts eines Stromrichters mit einer Drehstrombrückenschaltung mit einer positiven Halbbrücke und einer negativen Halbbrücke umfassend je einen Halbleiterchip vorgeschlagen. Das Verfahren kann ein Bestimmen einer ersten Nullspannung zum Zuführen an den Stromrichter umfassen, wobei die Nullspannung mit einer Verlängerung einer Leitzeit zumindest eines Halbleiterchips der Drehstrombrückenschaltung assoziiert ist sowie ein Zuführen der ersten Nullspannung an den Stromrichter. Ferner kann das Computer-implementierte Verfahren ein Erfassen eines ersten zeitlichen Verlaufs einer Ausgangsspannung und/oder eines Ausgangsstroms des Stromrichters umfassen, wobei die Ausgangsspannung und/oder der Ausgangsstrom zum Zuführen an ein elektrisches Antriebsmittel bestimmt ist sowie ein Bestimmen einer Differenz zwischen einem von dem zeitlichen Verlauf abgeleiteten Wert mit einem Referenzwert. Schließlich kann das Computer-implementierte Verfahren ein Bestimmen einer Regelspannung eines Reglers zum Zuführen an den Stromrichter umfassen, um die bestimmte Differenz zu minimieren sowie ein Bestimmen des Degradationsfortschritts zumindest teilweise basierend auf einem Vergleichen der Regelspannung mit einer Referenzregelspannung.

Unter einer Nullspannung kann vorliegend eine Spannung verstanden werden, welche als Gleichspannung bereitgestellt werden kann und dazu verwendet werden kann, eine Spannung mit einer gewünschten Amplitude (und/oder einem bestimmten Mittelwert) bereitzustellen. Die Nullspannung wird nicht primär dazu verwendet, elektrische Energie zum Antreiben einer Last (z.B. eines dem Stromrichter nachgeordneten elektrischen Antriebsmittels) bereitzustellen.

Unter einer Leitzeit kann eine Zeitspanne verstanden werden, während welcher zumindest einer der Halbleiterchips zu einer Ausgangsspannung am Stromrichter beiträgt.

Unter einem Degradationsfortschritt kann vorliegend ein Voranschreiten eines Alterungsprozesses des Stromrichters (hierin auch als Umrichter bezeichnet) verstanden werden. Ein Voranschreiten der Degradation kann mit einer ansteigenden Ausfallwahrscheinlichkeit des Stromrichters und/oder des elektrischen Antriebsmittels (z.B. durch einen Defekt) assoziiert sein. Der zeitliche Verlauf kann zu vorbestimmten (diskreten) Zeitpunkten erfasst werden und/oder kann kontinuierlich während des Betriebs des Stromrichters erfasst werden.

Der erfasste zeitliche Verlauf kann sich über eine Dauer von weniger als einer Sekunde erstrecken. In einigen Fällen kann such der erfasste zeitliche Verlauf über eine Sekunde bis zehn Sekunden erstrecken, in einigen Fällen über eine Dauer von elf Sekunden bis 30 Sekunden, in weiteren Fällen über eine Dauer von 31 Sekunden bis zu 60 Sekunden. In weiteren Fällen kann sich die Dauer auch über mehrere Minuten erstrecken (z.B., zwei, drei, vier, fünf, zehn, 15, 20, 25, 30, 35, 40, 45, 50, 55 Minuten). Es kann hingegen auch möglich sein, dass sich der zeitliche Verlauf über eine Dauer von mehr als einer Stunde erstreckt oder über mehrere Tage hinweg.

Der Referenzwert kann durch Vergleichen des von dem zeitlichen Verlauf abgeleiteten Werts mit dem Referenzwert ermöglicht werden. Der Referenzwert kann auf einem vorangegangenen Bestimmen eines Degradationsfortschritts eines (baugleichen) Stromrichters und einem von einem dazugehörigen erfassten zeitlichen Verlauf einer Ausgangsspannung und/oder eines Ausgangsstroms abgeleiteten Werts basieren. In einigen Fällen kann der Referenzwert aus einem vorangegangenen, systematischen Abbilden von unterschiedlichen Degradationsfortschritten für (baugleiche) Stromrichter auf einen entsprechend für jeden Degradationsfortschritt erfassten zeitlichen Verlauf einer Ausgangsspannung und/oder Ausgangsstroms abgeleitet werden. In einigen Fällen, kann der Referenzwert zumindest teilweise durch Verwenden eines neuronalen Netzes bestimmt werden (z.B. in dem dieses einen Referenzwert bestimmt, bei deren Erreichen mit einer vorbestimmten Wahrscheinlichkeit z.B. ein Ausfall des Stromrichters anzunehmen ist).

In einigen Fällen kann das Bestimmen eines Degradationsfortschritts nicht nur als eine absolute Feststellung (nämlich, dass eine Degradation eingetreten ist) erfolgen, sondern insbesondere kann auch eine z.B. stufenweise Feststellung erfolgen, wie weit der Degradationsfortschritt bereits fortgeschritten ist. Auf diese Weise kann z.B. eine Aussage dahingehend erfolgen, dass der Stromrichter z.B. 10 %, 20 %, 30 %, 40 %, 50 %, 60 %, 70 %, 80 %, 90 %, 99 % seiner erwarteten Lebenszeit bereits erreicht hat, was als Ausgangspunkt dafür benutzt werden kann zu entscheiden, ob ein Austausch des Stromrichters erfolgen soll.

Die Differenz kann positiv oder negativ sein.

Dies kann eine gezielte Verlängerung der Leitzeit zumindest eines Halbleiterchips ermöglichen. Durch die verlängerte Leitzeit des zumindest einen Halbleiterchips kann die Zeitspanne, welche zum Erfassen des ersten zeitlichen Verlaufs zur Verfügung steht verlängert werden und damit insgesamt mehr Information darüber gewonnen werden, ob ggf. eine Degradation des Stromrichters eingetreten ist. Insbesondere kann so auch in Betriebsbereichen des Stromrichters, in denen bislang kein datenbasiertes Condition Monitoring möglich war (z.B. weil eine Leitzeit eines zu charakterisierenden Halbleiterchips zu kurz ist, um eine ausreichende (statistische) Aussagekraft ermöglichen zu können).

Gemäß einer Ausführungsform kann das Computer-implementierte Verfahren ein Addieren der Regelspannung und der ersten Nullspannung vor Zuführen an den Stromrichter umfassen, um eine erste Summenspannung zu erhalten sowie ein Zuführen eines mit der ersten Summenspannung assoziierten Signals an den Stromrichter.

In einigen Fällen kann, bei Vorliegen einer Degradation des Stromrichters, eine Durchlassspannung über den Stromrichter abfallen (d.h. eine an dem Ausgang des Stromrichters anliegende Ausgangsspannung kann kleiner sein als eine dem Stromrichter zugeführte Eingangsspannung). Eine Durchlassspannung kann auch bei als "gesund" anzusehenden Stromrichtern auftreten, jedoch kann diese bei einem Vorliegen einer Degradation des Stromrichters verändert z.B. verstärkt werden, insbesondere dann, wenn ein degradierter Halbleiterchip beschaltet (d.h. zur Ausgangsspannung und/oder zum Ausgangsstrom des Stromrichters beiträgt) ist. In einem derartigen Fall kann sich eine Fehlspannung (bzw. im Zeitverlauf eine Fehlspannungszeitfläche) einstellen, welche durch den Regler zumindest teilweise kompensiert werden kann. Ferner kann sich in einigen Fällen die Regelspannung, welche notwendig ist, um eine potentiell vorhandene Differenz zu minimieren im Zeitverlauf verändern (z.B. kann diese bei einem Fortschreiten der Degradation größer werden), was ein Überwachen und Verfolgen eines Degradationsfortschritts im Zeitverlauf ermöglichen kann.

Durch eine Kombination der ersten Nullspannung und der Regelspannung zu der ersten Summenspannung können die mit dem Verwenden der ersten Nullspannung einhergehenden Vorteile mit einer Regelung der Ausgangsspannung und/oder des Ausgangsstroms kombiniert werden.

Gemäß einer weiteren Ausführungsform kann das Computer-implementierte Verfahren ferner ein Umwandeln der ersten Summenspannung in ein erstes Ansteuersignal für den zumindest einen Halbleiterchip zumindest teilweise basierend auf einem trägerbasiertem Modulationsverfahren oder einer Raumzeigermodulation umfassen.

Unter einem trägerbasierten Modulationsverfahren kann vorliegend ein Verfahren zur Steuerung von rotierenden elektrischen Maschinen (z.B. eines elektrischen Antriebmittels) und Netzen basierend auf dem Vergleich einer Sollspannung mit einem Trägersignal zur Bestimmung der Leitzeiten der Halbleiterchips. Das Trägersignal kann ein Dreieck- oder Sägezahnsignal sein. Das Trägersignal kann mit der Grundwelle der Ausgangsspannung in ungeraden Vielfachen synchronisiert sein, um eine synchrone Taktung zu erreichen.

Unter einer Raumzeigermodulation kann ein Verfahren zur Steuerung von rotierenden elektrischen Maschinen (z.B. eines elektrischen Antriebsmittels) basierend auf einer Pulsweitenmodulation verstanden werden.

Auf diese Weise kann eine derartige Aufbereitung der ersten Summenspannung ermöglicht werden, dass basierend darauf eine Ansteuerung individueller Halbleiterchips des Stromrichters ermöglicht werden kann und damit insgesamt die Ausgangsspannung und/oder der Ausgangsstrom des Stromrichters gezielt beeinflusst werden kann.

Gemäß einer weiteren Ausführungsform kann die Verlängerung der Leitzeit relativ zu einer Schaltperiode des Stromrichters erfolgen.

Unter einer Schaltperiode des Stromrichters kann die Zeitdauer verstanden werden, während welcher zumindest ein bestimmter Halbleiterchip des Stromrichters leitend ist. Mit anderen Worten, unter einer Schaltperiode kann die Periode verstanden werden, mit welcher ein Wechsel zwischen verschiedenen Halbleiterchips erfolgt.

Auf diese Weise kann der resultierende Tastgrad (engl.: *duty cycle*) eines beschalteten Halbleiterchips erhöht werden und damit zu einer verbesserten Bestimmung eines Degradationszustands des Stromrichters beitragen.

Gemäß einer weiteren Ausführungsform kann sich die Verlängerung der Leitzeit auf alle Phasen des Stromrichters auswirken.

In einigen Fällen kann der Stromrichter derart bereitgestellt werden, dass dieser drei Phasen bzgl. der Ausgangsspannung/des Ausgangsstroms aufweist. In einigen Fällen kann der Stromrichter so bereitgestellt werden, dass sich eine Phase jeweils aus dem Ausgang zweier komplementär zueinander angeordneter Halbleiterchips zusammensetzt. In einem derartigen Fall können jeweils drei Halbleiterchips in zwei komplementär zueinander angeordneten Gruppen angeordnet werden, wobei sich eine Phase jeweils aus dem Ausgang zweier komplementärer Halbleiterchips ergeben kann. Wird die Leitzeit für z.B. für alle drei einer Gruppe zugeordneten Halbleiterchips erhöht, so kann sich dies folglich auf alle drei Phasen des Ausgangs des Stromrichters auswirken.

Gemäß einer weiteren Ausführungsform kann die Nullspannung positiv sein.

In einem derartigen Fall kann die Summenspannung durch Addition der Regelspannung und der Nullspannung effektiv erhöht werden.

In einigen Fällen kann eine höhere Summenspannung mit einer höheren Leitzeit des zumindest einen Halbleiterchips einhergehen. Alternativ kann eine Erhöhung der Summenspannung auch eine Verkürzung der Leitzeit des zumindest einen Halbleiterchips bewirken.

Gemäß einer weiteren Ausführungsform kann die erste Nullspannung negativ sein.

In einem derartigen Fall kann die Summenspannung durch Addition der Regelspannung und der Nullspannung effektiv reduziert werden.

Gemäß einer weiteren Ausführungsform kann das Computer-implementierte Verfahren ferner ein Bestimmen einer zweiten Nullspannung umfassen, wenn bestimmt wird, dass der Degradationsfortschritt einen vorbestimmten Schwellenwert überschreitet, wobei die zweite Nullspannung mit einer Verringerung einer Leitzeit zumindest eines Halbleiterchips assoziiert ist.

Während bei Vorliegen einer möglichen Degradation eine Eingrenzung des zulässigen Betriebsbereichs (z.B. durch Begrenzung des zulässigen Ausgangsstroms) erfolgen kann oder eine Verwendung von Gate-Treibern für einen Halbleiterchip zur Reduktion von Schaltverlusten oder eine Reduktion einer Schaltfrequenz im Betrieb (was hingegen zu einem erhöhten Stromrippel des Ausgangsstroms führen kann) zu einer Vermeidung eines Voranschreiten eines Degradationsfortschritts beitragen kann, kann eine gezielte Verlängerung der Lebenszeit eines Halbleiterchips bzw. des Stromrichters dadurch erreicht werden, dass eine Leitzeit eines ggf. als degradiert anzusehenden Halbleiterchips reduziert wird und dadurch eine mit der Beschaltung einhergehende thermische Belastung des betreffenden Halbleiterchips (und/oder des Stromrichters) vermieden wird.

Insbesondere kann das Computer-implementierte Verfahren kostengünstig, z.B. als Softwareerweiterung, auch auf bereits ausgelieferte Stromrichter nachgerüstet werden und somit effizient und kostengünstig implementiert werden.

Gemäß einer weiteren Ausführungsform kann das Bestimmen der zweiten Nullspannung zumindest teilweise basierend auf einem thermischen Modell des Stromrichters erfolgen.

Das thermische Modell kann derart konfiguriert sein, dass eine Zuordnung einer Temperatur des Stromrichters (und/oder zumindest eines im Stromrichter enthaltenen Halbleiterchips) zu einer zweiten Nullspannung bzw. einer zweiten Summenspannung erlaubt. Das thermische Modell kann so eine Vorhersage erlauben, welche Reduktion der zweiten Nullspannung zu welcher Reduktion der Temperatur des Stromrichters (und/oder des zumindest einen Halbleiterchips) führt.

Das thermische Modell kann insbesondere für einen Betriebspunkt Temperaturhübe und eine Junctiontemperatur eines Halbleiterchips schätzen. Für einen gegebenen Halbleiterchip bzw. einen Stromrichter kann somit eine betriebspunktabhängige Berechnung des Verlaufs der Nullspannung ermöglicht werden, welcher die Junctiontemperatur und die Temperaturhübe minimiert. Diese Optimierung kann z.B. auf dem Umrichter oder einem überlagertem Regelungssystem erfolgen.

Die Berechnung der Nullspannung kann online (z.B. während des Betriebs eines Halbleiterchips und/oder des Stromrichters) oder offline (z.B. prädiktiv basierend auf in der Vergangenheit erfassten Erfahrungswerten) erfolgen.

Auf diese Weise kann eine effiziente und deterministische Bestimmung der zweiten Nullspannung ermöglicht werden und damit eine Verlängerung einer Lebenszeit des Stromrichters zu unterstützen.

Gemäß einer weitere Ausführungsform kann das Computer-implementierte Verfahren ein Addieren der zweiten Nullspannung zu der Regelspannung, um eine zweite Summenspannung zu erhalten umfassen sowie ein Umwandeln der zweiten Summenspannung in ein zweites Ansteuersignal für das zumindest einen Halbleiterchip zumindest teilweise basierend auf einem trägerbasiertem Modulationsverfahren oder einer Raumzeigermodulation sowie ein Zuführen des zweiten Ansteuersignals an den Stromrichter.

Auf diese Weise kann eine gezielte Ansteuerung einzelner Halbleiterchips des Stromrichters erreicht werden und auf diese Weise gezielt

Gemäß einer weitere Ausführungsform kann die Verringerung der Leitzeit relativ zu einer Schaltfrequenz oder einer Grundschwingungsperiode des Stromrichters erfolgen.

Die Grundschwingungsperiode des Stromrichters kann sich auf eine Frequenz der Eingangsspannung (bzw. dem Eingangsstrom), welche dem Stromrichter zugeführt wird, beziehen. Bei Bezug auf eine Grundschwingungsperiode kann insbesondere eine Modulation der Nullspannung derart erfolgen, dass sich bezogen auf Verluste/Leitzeiten an einem Halbleiterchip eine Temperaturverteilung einstellt, welche thermo-mechanische Spannungen am Halbleiterchip/Stromrichter reduziert. Dies kann vor allem für niedrige Ausgangsfrequenzen (d.h. lange Grundschwingungsperioden) vorteilhaft sein, da eine asymmetrische Temperaturverteilung der Phasen im verwendeten (thermischen) Modell des Stromrichters auftreten kann.

Gemäß einem zweiten Aspekt der Erfindung wird ein Computerprogrammprodukt vorgeschlagen, umfassend Befehle, die bei der Ausführung des Programms durch einen Computer diesen veranlassen, das Verfahren wie hierin beschrieben auszuführen.

In einigen Fällen kann das Computerprogrammprodukt z.B. in eine Antriebssteuerungssoftware des elektrischen Mittels integriert werden. In einigen Fällen können zumindest auszuführende Rechenoperationen (z.B. das Bestimmen der Abweichung und/oder einer Degradationsursache und/oder einees Degradationfortschritts) von einer vom Stromrichter getrennten Entität (z.B. eines Serversystems) getrennt sein. Auf diese Weise können ggf. rechenintensive Operationen von einer dediziert verwendeten Hardware ausgeführt werden.

Ein Computerprogrammprodukt, wie z.B. ein Computer-programm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem dritten Aspekt der vorliegenden Erfindung wird eine Computer-implementierte Vorrichtung zum Bestimmen eines Degradationsfortschritts eines Stromrichters mit einer Drehstrombrückenschaltung umfassend eine positive Halbbrücke und eine negative Halbbrücke mit je einem Halbleiterchip vorgeschlagen. Die Computer-implementierte Vorrichtung kann eine erste Bestimmungseinheit zum Bestimmen einer ersten Nullspannung zum Zuführen an den Stromrichter umfassen, wobei die Nullspannung mit einer Verlängerung einer Leitzeit des zumindest einen Halbleiterchips assoziiert ist sowie eine Zuführungseinheit zum Zuführen der ersten Nullspannung an den Stromrichter. Ferner kann die Computer-implementierte Vorrichtung eine Erfassungseinheit zum Erfassen eines ersten zeitlichen Verlaufs einer Ausgangspannung und/oder eines Ausgangsstroms des Stromrichters umfassen, wobei die Ausgangspannung und/oder der Ausgangsstrom zum Zuführen an ein elektrisches Antriebsmittel bestimmt ist sowie eine erste Bestimmungseinheit zum Bestimmen einer Differenz zwischen einem von dem zeitlichen Verlauf abgeleiteten Wert mit einem Referenzwert. Die Computer-implementierte Vorrichtung kann des Weiteren eine zweite Bestimmungseinheit zum Bestimmen einer Regelspannung eines Reglers zum Zuführen an den Stromrichter umfassen, um die bestimmte Differenz zu minimieren sowie eine dritte Bestimmungseinheit zum Bestimmen des Degradationsfortschritts zumindest teilweise basierend auf einem Vergleichen der Regelspannung mit einer Referenzregelspannung.

Die jeweilige Einheit, zum Beispiel jede der Erfassungseinheit und der Bestimmungseinheiten sowie der Zuführungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

In einigen Fällen kann der Stromrichter als ein 3-phasiger 2-Level Wechselrichter bereitgestellt werden, wobei der Stromrichter zumindest sechs Halbleiterchips bevorzugt als Bipolartransistoren mit isolierter Gate Elektrode, IGBT, oder als SiC- metal-oxide-semiconductor field-effect transistors, MOSFET, bereitgestellt werden.

Es sei angemerkt, dass die hierin genannten Aspekte der Erfindung nicht auf IGBTs oder MOSFETs als Halbleiterchips beschränkt sind, sondern dass Aspekte der Erfindung auch auf andere Halbleiterchips, welche hierin nicht explizit beschrieben werden, angewandt werden können.

In einigen Fällen kann der Stromrichter als eine Drehstrombrückenschaltung bereitgestellt werden.

Das elekrische Antriebsmittel kann als Elektromotor bereitgestellt werden. Das elektrische Antriebsmittel kann eine Synchronmaschine oder eine Asynchronmaschine sein.

Gemäß einer erste Ausführungsform kann die Computer-implementierte Vorrichtung eine Ausführungseinheit zum Ausführen des Computerprogrammprodukts (wie hierin beschrieben) umfassen, und/oder eine weitere Ausführungseinheit zum Ausführen des Verfahrens wie hierin beschrieben.

Die Ausführungseinheit kann z.B. als Computer, Prozessor, Field Programmable Gate Array (FPGA) oder eine Kombination davon vorgesehen sein.

Gemäß einem vierten Aspekt der vorliegenden Erfindung wird System zum Bestimmen eines Degradationsfortschritts eines Stromrichters vorgeschlagen. Das System kann das Computerprogrammprodukt (wie hierin beschrieben) umfassen sowie die Computer-implementierte Vorrichtung wie hierin beschrieben.

Das Computerprogrammprodukt kann in der Computer-implementierten Vorrichtung enthalten sein. In alternativen Beispielen kann das Computerprogramm auch in einer von der Computer-implementierten Vorrichtung entfernt vorgehaltenen Einheit enthalten sein. In letzterem beispielhaft genannten Fall kann die Computer-implementierte Vorrichtung über ein Netzwerk (z.B. ein lokales Netzwerk oder das Internet) oder eine USB-Verbindung auf das Computerprogrammprodukt zugreifen.

In einigen Fällen kann es auch möglich sein das Bestimmen einer zweiten Nullspannung losgelöst von einem Erfassen des (ersten) zeitlichen Verlaufs auszuführen und damit einem vermuteten Voranschreiten einer Degradation frühzeitig entgegenzuwirken.

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Insbesondere sei angemerkt, dass das oben beschriebene Verfahren bzw. die oben beschriebene Vorrichtung, das oben beschriebene Computerprogrammprodukt sowie das System nicht auf Stromrichter und/oder elektrische Antriebsmittel beschränkt ist, sondern auch in anderen industriellen Kontexten Anwendung finden kann.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fign. 1A-1C zeigen einen Querschnitt durch einen IGBT (Fig. 1A) sowie mögliche Degradationsursachen eines Stromrichters (Fign. 1B und 1C);

Fig. 2 zeigt ein exemplarisches System, welches ein Zusammenwirken eines Stromrichters in einem möglichen erfindungsgemäßen Kontext zeigt;

Fig. 3 zeigt ein exemplarisches Ersatzschaltbild einer Drehstrombrückenschaltung;

Fig. 4 zeigt ein exemplarisches $\alpha\beta$-Diagramm;

Fig. 5 zeigt einen exemplarischen Systemflussplan gemäß Aspekten der vorliegenden Erfindung;

Fig. 6 zeigt ein exemplarisches Ersatzschaltbild einer Sternschaltung;

Fign. 7A und 7B zeigen exemplarische Verläufe einer phasenabhängigen Nullspannung;

Fign. 8A und 8B zeigen exemplarische Ereigniswolken;

Fig. 9 zeigt ein Ablaufdiagramm eines exemplarischen Computer-implementierten Verfahrens;

Fig. 10 zeigt eine exemplarische Computer-implementierte Vorrichtung; und

Fig. 11 zeigt ein exemplarisches System zum Bestimmen eines Degradationsfortschritts.

In den Figuren sind gleiche oder funktionsgleiche Elemente mit denselben Bezugszeichen versehen worden, sofern nichts anderes angegeben ist.

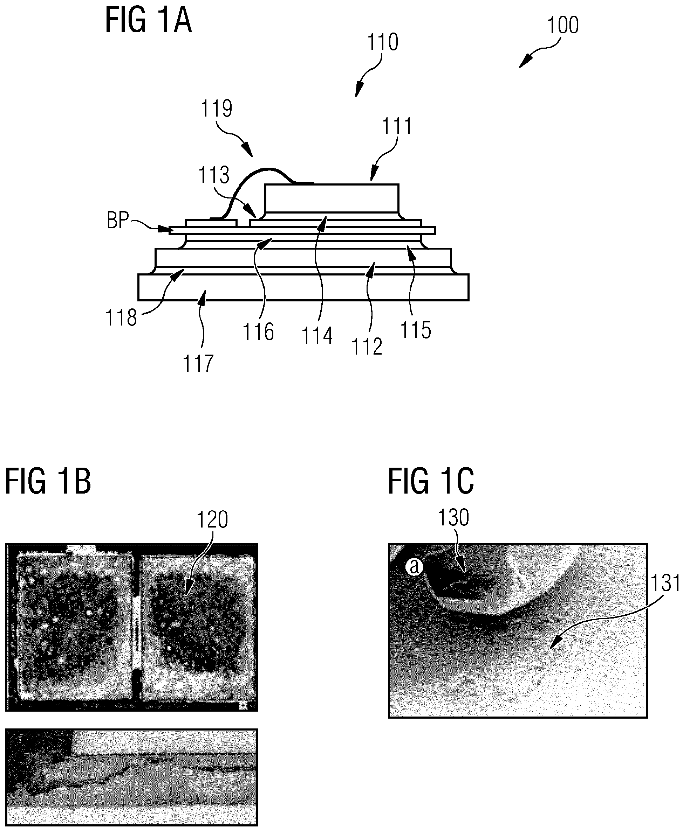

Fig. 1 zeigt einen exemplarischen Querschnitt durch einen IGBT 110, wie dieser z.B. in einem Stromrichter bzw. Umwandler enthalten sein kann.

Unter einem Stromrichter werden vorliegend Vorrichtungen verstanden, welche z.B. Wechselstrom in Gleichstrom umwandeln (Gleichrichter) oder Vorrichtungen, welche einen Gleichstrom in einen Wechselstrom umwandeln (Wechselrichter). Ferner kann unter einem Stromrichter auch ein Umrichter verstanden werden, welcher z.B. als Frequenzumrichter fungieren kann und z.B. eine Änderung einer Wechselstromfrequenz bewirken kann.

IGBT besteht aus einem Chip 111, welcher auf einer Basisplatte 112 angeordnet ist. Zwischen dem Chip 111 und der Basisplatte 112 kann eine erste Kupferschicht 113 angeordnet sein, um eine optimale Wärmeleitung zwischen dem Chip 111 und der Basisplatte 112 zu ermöglichen.

Chip 111 kann durch eine erste Lötzinnschicht 114 an der Kupferschicht 113 angebracht sein. Ferner kann die Basisplatte 112 über eine zweite Lötzinnschicht 115 und eine zweite Kupferschicht 116 mit der ersten Kupferschicht 113 verbunden sein.

Basisplatte 112 kann oberhalb einer Kühlplatte 117 angeordnet sein. Zwischen der Basisplatte 112 und der Kühlplatte 117 kann eine Wärmeleitpasteschicht 118 vorgesehen sein.

Ferner kann eine Oberseite des Chips 111 über einen Bonddraht 119 mit einer Stromversorgung (in Fig. 1 nicht abgebildet) verbunden sein.

Fig. 1B zeigt ferner eine mögliche Degradation eines Stromrichters (Ciappa, M.: "Selected failure mechanisms of modern power modules", Microelectronics Reliability, Vol. 42, Issues 4-5, 2002), welche z.B. durch eine Degradation einer Lötverbindung 120 hervorgerufen werden kann. Derartige Fehler in Lötverbindungen können z.B. durch (thermische) Risse im Lot hervorgerufen werden und/oder durch eine Ablösung der Lötverbindung (z.B. auch durch ein Ablösen eines Bonddrahts von der Oberseite des Chips 112 oder einer Stromversorgung). Eine Degradation einer Lötverbindung kann zu einer schlechteren elektrischen Kontaktierung führen und damit zu einer schlechteren Übertragung elektrischer Energie zum Betrieb von z.B. einem IGBT 110. Dies kann ferner zu einer Erhöhung des thermischen Widerstands führen und damit zu einer Änderung einer Durchlassspannung des IGBT, was zu einer unerwünschten Erwärmung des IGBT führen kann und damit eine Degradation des IGBT 110 weiter vorantreiben kann.

Fig. 1C (Ciappa, M.: "Selected failure mechanisms of modern power modules", Microelectronics Reliability, Vol. 42, Issues 4-5, 2002) zeigt eine weitere mögliche Degradation des Umrichters, welche z.B. durch eine Ablösung des Bonddrahtes 130 von einer Stromversorgung 131 hervorgerufen werden kann. In einem derartigen Fall kann z.B. eine Kontaktfläche zwischen dem Bonddraht 130 und der Stromversorgung 131 durch die Ablösung des Bonddrahtes 130 verkleinert werden. Dies kann zu einer Erhöhung des Widerstands der leitenden Verbindung zwischen z.B. einem IGBT und einer darunterliegenden Stromversorgung, verstanden werden. Dieser erhöhte Widerstand muss z.B. durch eine Ausgangsstromregelung des IGBT 110 kompensiert werden. Dies kann schließlich zu einer Erwärmung des IGBT 110 beitragen und damit dessen Degradation weiter vorantreiben.

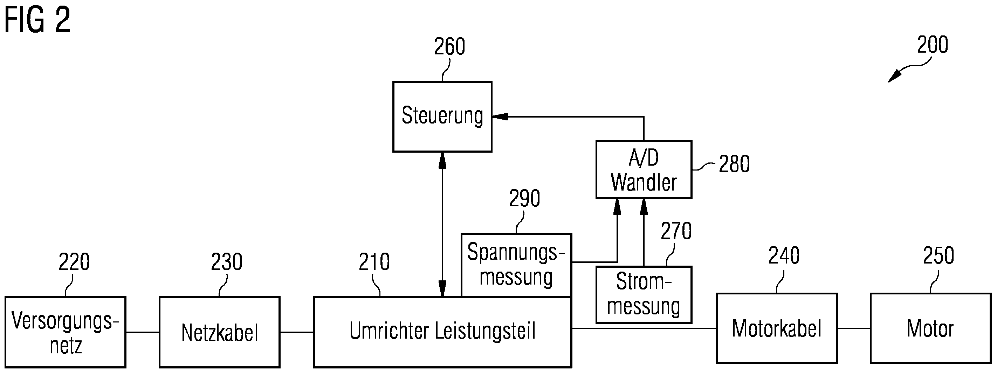

Fig. 2 zeigt ein exemplarisches System 200, welches ein Zusammenwirken eines Stromrichters (auch Umrichter) in einem möglichen erfindungsgemäßen Kontext zeigt.

Unter einem Stromrichter werden vorliegend Vorrichtungen verstanden, welche z.B. Wechselstrom in Gleichstrom umwandeln (Gleichrichter) oder Vorrichtungen, welche einen Gleichstrom in einen Wechselstrom umwandeln (Wechselrichter). Ferner kann unter einem Stromrichter auch ein Umrichter verstanden werden, welcher z.B. als Frequenzumrichter fungieren kann und z.B. eine Änderung einer Wechselstromfrequenz bewirken kann.

Das System 200 umfasst einen Umrichter (Leistungsteil) 210. Der Umrichter 210 wird von einem Versorgungsnetz 220 über ein Netzkabel 230 eingangsseitig mit Strom versorgt.

Ausgangsseitig kann der Umrichter 210 über ein Motorkabel 240 mit einem Motor 250 verbunden sein.

Umrichter 210 kann sich ferner mittels Steuerung 260 in einem geschlossenen Regelkreis befinden, welcher konfiguriert einen Ausgangsstrom des Umrichters 210 konstant zu halten.

Dies kann dadurch erreicht werden, dass ein Ausgangsstrom des Umrichters 210 durch eine Strommessung 270 gemessen wird (z.B. durch Messen eines um ein Kabel (z.B. Motorkabel 240) hervorgerufenen Magnetfelds). Das Resultat der Strommessung 270 kann eine zum Ausgangsstrom proportionale Spannung (z.B. proportionale Ausgangsspannung) sein, welche einem A/D Wandler 280 zugeführt werden kann.

A/D Wandler 280 kann dazu eingerichtet sein, die analoge Ausgangsspannung zu digitalisieren und damit in ein digitales Messsignal umzuwandeln.

Bevorzugt erfüllt die Abtastrate des A/D Wandlers 280 zumindest das Nyqvist-Kriterium. In einigen beispielhaften Fällen, wie hierin beschrieben, kann jedoch auch eine Überabtastung des Ausgangsstroms mittels A/D Wandler 280 vorgenommen werden.

In einigen Fällen kann auch eine dedizierte Spannungsmessung 290 (z.B. eine direkte Ausgangsspannung) vorgesehen sein. In einem derartigen beispielhaften Anwendungsfall kann der A/D Wandler 280 auch direkt die betreffende Ausgangsspannung abtasten.

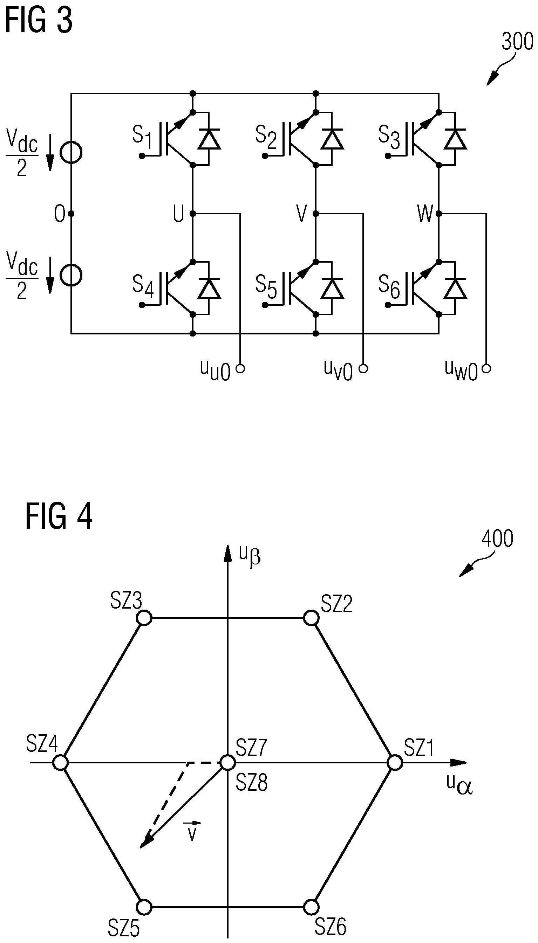

Fig. 3 zeigt ein exemplarisches Ersatzschaltbild einer Drehstrombrückenschaltung 300 gemäß Aspekten der vorliegenden Erfindung.

Drehstrombrückenschaltung 300 umfasst drei in einer oberen Hälfte der Drehstrombrückenschaltung 300 angeordnete Halbleiterchips $S_1$-$S_3$ (positive Halbbrücke).

Drehstrombrückenschaltung 300 umfasst drei in einer unteren Hälfte der Drehstrombrückenschaltung 300 angeordnete Halbleiterchips $S_4$-$S_6$ (negative Halbbrücke).

Die positve Halbbrücke sowie die negative Halbbrücke können auch in umgekehrter Reihenfolge angeordnet werden.

Alle oder zumindest einige der Halbleiterchips $S_1$-$S_6$ können als IGBTs bereitgestellt werden.

Drehstrombrückenschaltung 300 wird vorliegend mit einer Gleichspannungsquelle $V_{DC}$ betrieben.

Drehstrombrückenschaltung 300 umfasst ferner drei Klemmen $u_{u0}$, $u_{v0}$ und $u_{w0}$, über die eine 3-phasige Last an einen Ausgang der Drehstrombrückenschaltung 300 angeschlossen werden kann.

Ein Einschalten der oberen Halbleiterchips $S_1$-$S_3$ kann dazu führen, dass die drei Klemmen $u_{u0}$, $u_{v0}$ und $u_{w0}$ mit einem positiven Zwischenkreispotential verbunden werden, wobei die Klemmen $u_{u0}$, $u_{v0}$ und $u_{w0}$ jeweils an den entsprechenden Knoten U, V, W abgegriffen werden.

Analoges gilt für ein negatives Zwischenkreispotential, wenn die jeweiligen in der unteren Hälfte der Dreh-

strombrückenschaltung 300 angeordneten Halbleiterchips $S_4$-$S_6$ eingeschaltet werden.

Um einen Kurzschluss zu vermeiden, ist es von Bedeutung, die in der oberen Hälfte der Drehstrombrückenschaltung 300 angeordneten Halbleiterchips $S_1$-$S_3$ nicht gleichzeitig mit den in der unteren Hälfte der Drehstrombrückenschaltung 300 angeordneten Halbleiterchips S4-S6 zu betreiben. Ein paralleler Betrieb von Halbleiterchipsn einer der beiden Hälften ist hingegen möglich. In einem derartigen Fall entscheidet das Stromvorzeichen einer jeweiligen Phase, ob ein negatives oder positives Zwischenkreispotential mit den Klemmen $u_{u0}$, $u_{v0}$ und $u_{w0}$ verbunden ist.

Während einer mechanischen und/oder elektronischen Periode (Fundamentalperiode) können sich Szenarien ergeben, in welchen Gruppen von Halbleiterchipsn für gewisse Zeitabschnitte für längere Zeiten beschaltet werden, als dies für andere Gruppen von IGBTs der Fall sein kann. Dies kann sowohl in einer "two level" (d.h. pro Halbbrücke ist jeweils im oberen und unteren Zweit der Drehstrombrückenschaltung 300 je nur ein serieller Halbleiterchip angeordnet (bzw. ggf. auch mehrere Halbleiterchips in Parallelschaltung)) als auch in einer "multilevel" (d.h. pro Halbbrücke sind merehre Halbleiterchips in serielle Schaltung angeordnet) Topologie auftreten. Die "multilevel" Topologie kann gegenüber der "two level" Topologie den Vorteil bieten, dass die Ausgangsspannung an der Drehstrombrückenschaltung mehrere Ausgabelevels enthalten kann und die Ausgangsspannung somit mit einer höheren Auflösung bereitgestellt werden kann.

Da Halbleiterchips meist gruppenweise beschaltet werden, können sich so zeitliche Sektoren ergeben, sodass ein von dem Stromrichter ausgegebenes Signal aus einer Superposition der jeweils beschalteten Halbleiterchipsn ergibt. Eine Degradation eines Halbleitermoduls kann zu einer Veränderung der Perioden(-dauer, z.B. im Bereich einer Halbperiode oder Viertelperiode) führen, was durch eine einen Ausgang des Stromrichters regelnde Elektronik ausgeglichen werden muss und sich somit z.B. in einem P- und/oder I-Signals eines PI-Reglers widerspiegeln kann.

Es sei ferner angemerkt, dass jede einzelne Phase zwei verschiedene diskrete Schaltzustände (ein/aus) annehmen kann. Wird von drei Phasen ausgegangen, so ergeben sich insgesamt $2^3$ = 8 Schaltzustände.

Ein sequentielles Beschalten der Halbleiterchips der Drehstrombrückenschaltung 300 führt zu einem Durchlaufen von insgesamt sechs Schaltzuständen, welche in Form eines $\alpha\beta$-Diagramms 400 dargestellt werden können, wie in Fig. 4 dargestellt.

Fig. 4 zeigt ein $\alpha\beta$-Diagramm 400 umfassend einen Vektor $\vec{v}$ welcher in der $\alpha\beta$-Ebene rotiert und mit Hilfe der Schaltzustände SZ1-SZ6 nachgebildet wird, wobei jeder der Schaltzustände SZ1-SZ6 dem Beschalten eines respektiven Halbleitermoduls $S_1$-$S_6$ entspricht.

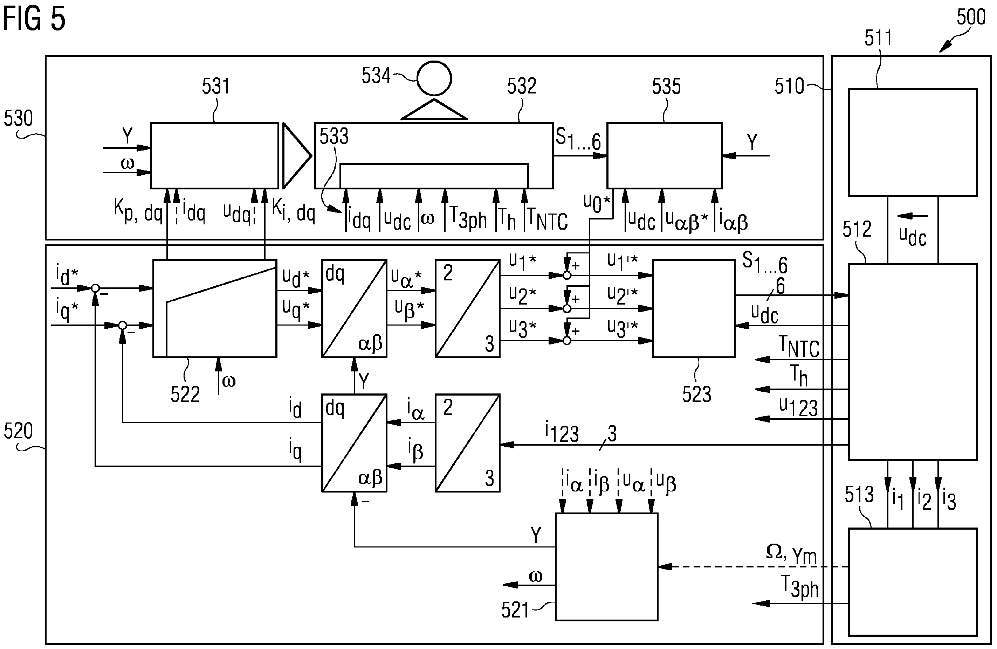

Fig. 5 zeigt einen Signalflussplan 500 eines Zusammenwirkens eines physischen Systems 510, eines Regelungssystems 520 sowie eines parallel zum Regelungssystems 520 geschalteten Condition Monitoring Systems 530.

Das physikalische System 510 kann dabei ein DC-System 511 umfassen. DC-System 511 kann zum Einsatz zusammen mit einem Stromrichter für ein elektrisches Antriebssystem bereitgestellt sein, welcher in der Regel eine Zwischenkreisspannung über eine Einspeisung zur Verfügung stellt (Diodengleichrichter, AFE). Grundsätzlich ist jedoch auch jede andere DC-Quelle bzw. -Last implementierbar, wie z.B. eine DC-Ladesäule oder ein Photovoltaik-Feld, etc.

Die von dem DC-System 511 zur Verfügung gestellte Spannung $U_{DC}$ kann an einen Converter (Stromrichter) 512 bzw. eine entsprechende Leistungselektronik zur Verfügung gestellt werden. Der Stromrichter 512 kann dabei z.B. als eine Drehstrombrückenschaltung (z.B. die Drehstrombrückenschaltung 300) bereitgestellt werden. Der Stromrichter 512 bzw. die Leistungselektronik besteht dabei nicht alleinig aus der Drehstrombrückenschaltung, sondern kann auch Sensoren zur Strommessung, Temperaturüberwachung, Spannungsmessung, etc. umfassen. Diese Sensoren können zusätzlich in das datenbasierte Condition Monitoring eingebunden werden.

Mit einem Ausgang des Stromrichters 512 ist schließlich ein drei-phasiges AC-System 513 verbunden, welches z.B. durch die drei Phasen $i_1$, $i_2$ und $i_3$ mit dem Stromrichter 512 verbunden sein kann, welche durch den Konverter 512 erzeugt wurden.

Das drei-phasige AC-System 513 kann als ein Elektromotor bzw. eine Asynchronmaschine oder eine Synchronmaschine bereitgestellt werden.

In einigen Fällen kann das drei-phasige AC-System 513 jedoch auch ein drei-phasiges elektrisches Netz sein.

Regelungssystem 520 kann auf einer feldorientierten Regelung (auch Vektorregelung) basieren. Bei der feldorientierten Regelung werden sinusförmige - oder als weitgehend sinusförmig angenommene - Wechselgrößen (beispielsweise Wechselspannungen und Wechselströme) nicht direkt in ihrem zeitlichen Momentanwert, sondern in einem um den Phasenwinkel innerhalb der Periode bereinigten Momentanwert geregelt. Zu diesem Zweck werden die erfassten Wechselgrößen jeweils in ein mit der Frequenz der Wechselgrößen rotierendes Koordinatensystem übertragen. Innerhalb des rotierenden Koordinatensystems ergeben sich dann aus den Wechselgrößen Gleichgrößen, auf die alle üblichen Verfahren der Regelungstechnik angewandt werden können.

In einer möglichen Implementierung kann dabei eine Transformation von Strommesswerten in ein (Rotor-) Flussbasiertes Koordinatensystems (dq-System) erfolgen. Ferner kann sich daran eine entkoppelte Regelung des feldbildenden Stroms (ausgedrückt durch die d-Achse) und des drehmomentbildenden Stroms (ausgedrückt durch die q-Achse) anschließen. Für jede der beiden Koordinatenachsen (d und q) kann ein entsprechender PI-Regler vorgesehen werden. Ein Transformationswinkel des flussbasierten Koordinatensystems kann je nach Anwendungsfall direkt gemessen oder über eine Modellierung geschätzt werden, wie dies durch Flusswinkelbestimmungseinheit 521 ermöglicht werden kann.

Bei Asynchronmaschinen kann das Spannungs-/Strommodell auf Messgrößen basieren, bei Synchronmaschinen kann eine direkte Messung der Rotorlage erfolgen, bei einem elektrischen Netz kann ein Spannungsmodell bzw. eine Phasenregelschleife (engl.: *phase locked loop* (PLL)) basierend auf Messgrößen implementiert werden.

Durch einen Regelungsblock 522 kann aus einer Regelabweichung (z.B. durch einen Soll-/Istwertvergleich) eine Sollspannung berechnet werden, welche vom Stromrichter 512 ausgeben werden muss, um die Regelabweichung zu minimieren, idealerweise auf null zu setzen. Die so bestimmte Sollspannung kann aus dem flussbasierten Koordinatensystem rücktransformiert werden und als Spannungssollwerte für die drei Phasen des betrachteten Systems verwendet werden.

Innerhalb des Modulators 523 können aus den Sollspannungen zusammen mit einer gemessenen Zwischenkreisspannung die Schaltzeitpunkte für die Leistungshalbleiter berechnet und als Ansteuersignale an den Stromrichter übergeben werden.

Das Condition Monitoring 530 kann derart bereitgestellt werden, dass es die verfügbaren Mess-und/oder Reglergrößen auswerten kann. Dies kann z.B. einen P- und/oder I-Teil der beiden PI-Regler umfassen, gemessene Ströme und/oder gemessene Spannungen. Diese können jeweils als zeitlicher Verlauf erfasst worden sein.

In einem ersten Schritt können in einer Fenster- bzw. Analyseeinheit 531 die verfügbaren Daten mittels eines auf eine elektrische oder mechanische Periode abgestimmten Fensters (z.B. durch Falten mit einer Fensterfunktion) vorbearbeitet werden. Hieran anschließen kann sich das Ausführen einer Frequenzanalyse, z.B. das Ausführen einer FFT, ein Berechnen einer Fourier-Serie, etc. Hieraus können dazugehörige Fourierkoeffizienten (Amplitude und Phasenlage) der im Signal des erfassten zeitlichen Verlaufs enthaltenen Oberwellen.

Das Ausführen einer derartigen Frequenzanalyse kann zyklisch und damit wiederholt ausgeführt werden. Dies kann ein Überwachen einer möglichen Änderung der Fourierkoeffizienten im Zeitverlauf ermöglichen.

Basierend hierauf kann mittels einer Condition Monitoring Überwachungseinheit 532 ein Bestimmen erfolgen, z.B. durch Vergleichen der Fourierkoeffizienten mit Referenz-Fourierkoeffizienten, ob ein Voranschreiten des Degradationsfortschritts eingetreten ist.

Zusätzlich können in das datenbasierte Condition Monitoring weitere Umweltbedingungen 533 mit einfließen (z.B. eine Luftfeuchtigkeit, Umgebungstemperatur, etc.). Bei gleichbleibenden Umweltbedingungen kann aus einer Veränderung der Fourierkoeffizienten so auf ein Voranschreiten einer Degradation geschlossen werden, wodurch letztendlich auf einen beginnenden Fehler im betrachteten System geschlossen werden kann. In anderen Worten, typische Fehlerbilder in Drehstrombrückenschaltungen können typischerweise zu entsprechenden Signaturen in den untersuchten höheren Harmonischen führen.

Basierend hierauf kann Überwachungseinheit 532 dann einen Gesundheitszustand 534 (engl.: *state of health* (SOH)) des betrachteten Systems bestimmen.

An Überwachungseinheit 532 kann sich ferner eine Nullspannungsanpassungseinheit 535 anschließen. Diese kann basierend auf den durch durch Überwachungseinheit 532 bereitgestellten Daten eine Nullspannung derart bestimmen, so dass diese eine Leitzeit zumindest eines Halbleitermoduls (z.B. eines Halbleitermoduls, welches als degradiert angesehenw ird) herabsetzt und damit die Lebenszeit des betreffenden Halbleitermoduls weiter verlängert werden kann. Die Nullspannung kann auf das Ausgabesignal des Regelungsblocks 522 aufaddiert werden und schließlich dem Modulator 532 zugeführt werden um ein Ansteuersignal zu bestimmen, welches schließlich dem Stromrichter 512 zugeführt werden kann, so dass eine Anpassung der Leitzeit des betreffenden Halbleitermoduls (ggf. auch mehrerer Halbleiterchips) erfolgen kann.

Wird eine Phasenlage der betrachteten höheren Harmonischen bestimmt, so kann eine Fehlerlokalisation dahingehend erfolgen, welcher der Halbleiterchips möglicherweise von einem Fehler bzw. Ausfall (und damit mit einem Voranschreiten der Degradation) betroffen ist, wie oben bereits beschrieben.

Es sei angemerkt, dass das Condition Monitoring 530 physisch in dem physischen System 510 enthalten sein kann (z.B. als Teil des drei-phasigen AC-Systems 513). Alternativ kann es auch möglich sein, dass das Condition Monitoring 530 in einer entfernten Entität (z.B. als Cloud-Dienst, als Edge-Gerät, etc.) vorgehalten wird, welche z.B. mit dem physischen System 510 und/oder dem Regelungssystem 520 in Kommunikationsverbindung steht.

Das Anlegen einer Nullspannung kann zu einer Erhöhung oder Absenkung einer Aussteuerung des Stromrichters auf allen Phasen führen, bei der jedoch eine an Lastklemmen anliegende verkettete Spannung gleichbleibt. Die Nullspannung kann bevorzugt so gewählt werden, dass die Leitzeit für ein Halbleitermodul von Interesse verlängert wird, im Vergleich zu Halbleiterchips, denen im vorliegenden Kontext eine geringere Bedeutung beigemessen wird. Je nach Polarität des Ausgangsstroms einer Phase wird die Nullspannung dann positiv oder negativ gewählt. Die auf diese Weise erhaltene (zweite) Summenspannung kann dann einem Modulator zugeführt werden und basierend auf einer Raumzeigermodulation oder einem trägerbasierten Modulationsverfahren in ein entsprechendes Ansteuersignal für die zumindest sechs Halbleiterchips überführt werden.

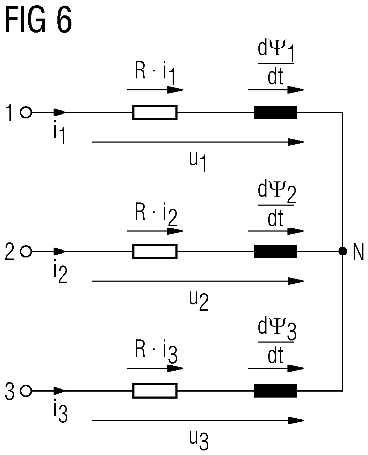

Fig. 6 zeigt ein exemplarisches Ersatzschaltbild einer Sternschaltung.

Der vorliegende Fall zeigt eine Last, welche dreiphasig ist und im Stern verschaltet ist. Die drei Phasen sind durch die Bezugszeichen 1, 2 und 3 angegeben. Jede der Phasen 1, 2 und 3 ist ein jeweiliger Strom $i_1$, $i_2$ und $i_3$ zugeordnet.

An einer jeweils die drei Phasen 1, 2 und 3 betreffende Last R führt zu einem Spannungsabfall $u_1$, $u_2$ und $u_3$ in jeder der drei Phasen.

Die drei Phasen 1, 2 und 3 laufen jeweils bei einem Sternpunkt N zusammen. Bei einem angeschlossenem Sternpunkt kann es erforderlich sein, die Nullspannung an diesem Punkt zu beeinflussen, da ansonsten eine Beeinflussung der additiven Spannung auf den drei Phasenspannungen $u_1$, $u_2$ und $u_3$ erfolgt.

Die drei Spannungen $u_1$, $u_2$ und $u_3$ addieren sich am Sternpunkt auf.

Das hierin vorgestellt Verfahren zum Bestimmen eines Degradationsfortschritts eines Stromrichters kann z.B. für im Stern verschaltete Motoren verwendet werden, bei denen der Sternpunkt nicht angeschlossen ist.

Durch $d\psi_n/dt$, mit $n \in \{1, 2, 3\}$, wird vorliegend die zeitliche Ableitung des Flusses an der Last beschrieben. Hieraus kann die an der Last induzierte Spannung erhalten werden. Die Ausgangsspannung des Stromrichters liegt über der gesamten Last an, wobei sich die Ausgangsspannung aus einem ohmschen Widerstand und der vorstehend genannten induzierten Spannung zusammensetzt.

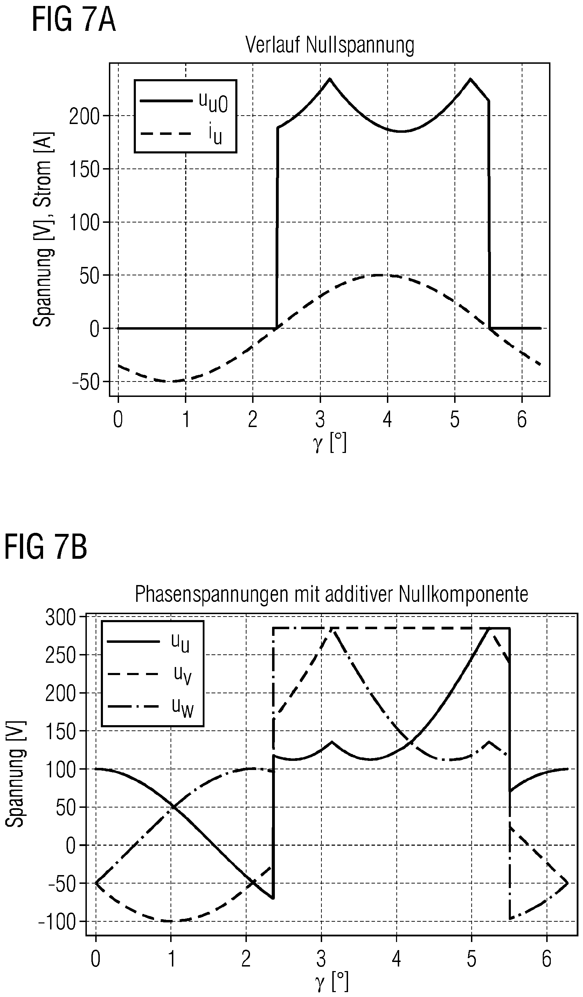

Fign. 7A und 7B zeigen exemplarische Verläufe einer phasenabhängigen Nullspannung.

Im Sinne einer Charakterisierung eines Degradationszustands eines Stromrichters kann es vorteilhaft sein, eine Nullspannung zu finden, die dazu führt, dass die Leitzeit eines Halbleitermoduls insgesamt verlängert wird. Dies kann in vorteilhafter Weise dazu beitragen, über ein längeres Zeitintervall hinweg einen ersten zeitlichen Verlauf zu erfassen, welcher dazu verwendet werden kann, auf einen Degradationszustand des Stromrichters schließen zu können (wie hierin beschrieben).

Eine bevorzugte, jedoch nicht als ausschließlich anzusehende, Möglichkeit kann es sein, ein Halbleitermodul von Interesse (d.h. ein Halbleitermodul für welches eine Charakterisierung eines Degradationszustands durchgeführt werden soll) dauerhaft eingeschaltet zu lassen.

Dieser Fall ist in Fig. 7A dargestellt. Fig. 7A zeigt den Verlauf einer exemplarischen Nullspannung $u_{n0}$ aufgetragen gegen die elektrische Phase $\gamma$ (in rad), wie sie sich durch eine vollständige Umdrehung des vorliegenden Drehstromsystems ergeben kann, und wie sie an einem Sternpunkt auftreten kann. Dies erfolgt für Phase u eines dreiphasigen Drehstromssystems. Die Phase $\gamma$ variiert dabei vorliegend zwischen und 6,28 rad (entsprechend einer Phase von $2\pi$), wobei je ein rad mit der Beschaltung eines Halbleitermoduls des Stromrichters assoziiert ist. Die verwendeten Halbleiterchips können jeweils sequentiell oder zumindest teilweise auch gleichzeitig beschaltet werden. Im Rahmen der vorliegenden Raumzeigermodulation bzw. Pulsweitenmodulation (PWM) können alle vorhandenen Halbleiterchips eines Stromrichters (sequentiell) beschaltet werden, jedoch mit unterschiedlichen Zeiten und/oder Ausgangsspannungen. Unterschiedliche Phasenspannungen können dabei durch unterschiedliche Ansteuerzeiten auf den einzelnen Phasen generiert werden.

Bevorzugt sollten jedoch immer noch Schalthandlungen vorgenommen werden, da ansonsten keine Schaltverluste (dies könnte problematisch sein, da sich mit den Schaltverlusten auch die Temperatur des Halbleiterchips - und damit die Durchlassspannung, die im Verfahren untersucht wird verändern würde) mehr auftreten würden und damit andere, unerwünschte Effekte (wie z.B. Änderungen an auftretenden Verlusten, Temperaturänderungen, Reduktion der Ausgangsspannungs-/stromqualität, da keine sinusförmigen Größen mehr den Spannungs- bzw. Stromverlauf mehr eingeprägt werden) zum Tragen kommen würden.

Ferner zeigt Fig. 7A den Verlauf eines mit der Nullspannung $u_{n0}$ verknüpften Stroms $i_u$ gegenüber der Phase $\gamma$ wie oben beschrieben, d.h. über eine elektrische Periode. Insbesondere repräsentiert $i_u$ den sinusförmigen Strom einer der drei Phasen eines verwendeten Drehstromsystems. Der Stromverlauf, welcher an den anderen beiden Phasen anliegt, würde dabei den gleichen Zeitverlauf zeigen, jedoch wären diese Ströme jeweils zu dem in Fig. 7A gezeigten Strom (und relativ zueinander) um 120° phasenverschoben. Ein Zweig (z.B. der obere oder untere Teil einer Halbbrücke) führt den Ausgangsstrom jeweils für die Hälfte der elektrischen Periode (180°, 3,14 rad). In dieser Zeit kann durch die Nullspannung der jeweilige Zweig untersucht werden durch Addition der Nullspannung.

Fig. 7A zeigt den exemplarischen Fall in welchem bei einer Phase von 2 rad eine Erhöhung der Nullspannung $u_{n0}$ von 0 V auf bis zu 190 V erhöht wird, später bei einer Phase von 3 rad weiter auf 225 V erhöht wird, für eine Phase von 4 rad auf ca. 180 V verringert wird, ehe die Nullspannung $u_{n0}$ für eine Phase von 5 rad wieder auf ca. 225 V erhöht wird.

Die Nullspannung $u_{n0}$ kann ferner durch einen Modulator so in ein Ausgangssignal umgewandelt werden, dass dieses zumindest ein Halbleitermodul leitend schaltet, wenn die Kombination aus Reglersollspannung und Nullspannung $u_{n0}$ einen gewissen (vorbestimmten) Schwellenwert überschreitet (z.B. 175 V). Liegt die Kombination unterhalb dieses Werts, so ist das betreffende Halbleitermodul nicht-leitend. Auf diese Weise kann die Nullspannung $u_{n0}$ als ein Triggersignal dafür eingesetzt werden, ob ein Halbleitermodul des Stromrichters leitend ist oder nicht.

Für diese exemplarisch gewählten Werte der Nullspannung $u_{n0}$ bildet der dazugehörige Strom $i_u$ einen sinusförmigen Verlauf aus, insbesondere eine positive Halbwelle im Bereich der zuvor diskutierten Phasen $\gamma$.

Es ist dabei an Anliegen des hierin vorgestellten Regelungskonzepts, möglichst sinusförmige Ausgangsspannungen bzw. -ströme bereitzustellen.

Fig. 7A zeigt dabei, dass sobald der Phasenstrom $i_u$ positiv ist, eine optimierte Nullspannung $u_{u0}$ berechnet wird.

Dies kann dazu verwendet werden, die Halbleiterchips auf Phase u, die bei positiven Ausgangsstrom beteiligt sind besser untersuchen zu können.

Demgegenüber zeigt Fig. 7B exemplarische Phasenspannungen $u_u$, $u_v$ und $u_w$ mit additiver Nullspannung gegenüber der Phase $\gamma$ (wobei die Phase $\gamma$ bereitgestellt werden kann wie oben beschrieben).

Für die Phase u, erfolgt für eine Phase von ca. 2 rad eine Erhöhung der Nullspannung auf 100 V und weiter für eine Phase von ca. 4 rad eine Erhöhung auf ca. 275 V. Bei einer Phase von 5,5 rad erfolgt eine sprunghafte Verringerung der Nullspannung auf ca. 50 V.

Für die Phase u, erfolgt für eine Phase von ca. 2,2 rad eine abrupte Erhöhung der Nullspannung von ca. -40 V auf ca. 175 V. Zwischen 2,2 rad hin zu ca. 3 rad erfolgt eine kontinuierliche weitere Erhöhung der Nullspannung auf 275 V. Diese wird bis zu einer Phase von 5 V beibehalten und ab einer Phase von ca. 5,5 V abrupt auf ca. 20 V abgesenkt.

Für die Phase $u_w$ wird vorliegend z.B. für eine Phase von ca. 2 rad eine Erhöhung der entsprechenden Nullspannung von ca. 100 V auf ca. 275 V ausgeführt. Bei einer Phase von 3 rad hingegen erfolgt eine kontinuierliche Verringerung der Nullspannung auf ca. 125 V, ehe sie für eine Phase von ca. 5,5 rad ab -100 V abgeändert wird.

Die, wie mit Bezug zu Fig. 7A berechnete Nullspannung kann auf alle drei Phasenspannungen wie in Fig. 7B gezeigt, aufaddiert werden. Ohne Addition einer Nullspannung würden die Phasenspannungen ihrem sinusförmigen Verlauf folgen und über den Zeitverlauf hinweg jeweils eine Phasenverschiebung von 120° behalten. Hierbei wird insbesondere auf jede der dargestellten Phasen u, v, w des betrachteten Drehstromsystems jeweils ein gleicher Nullspannungswert aufaddiert.

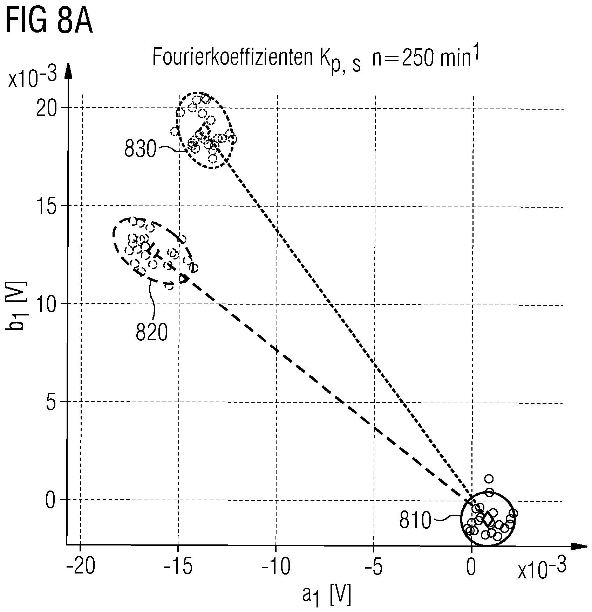

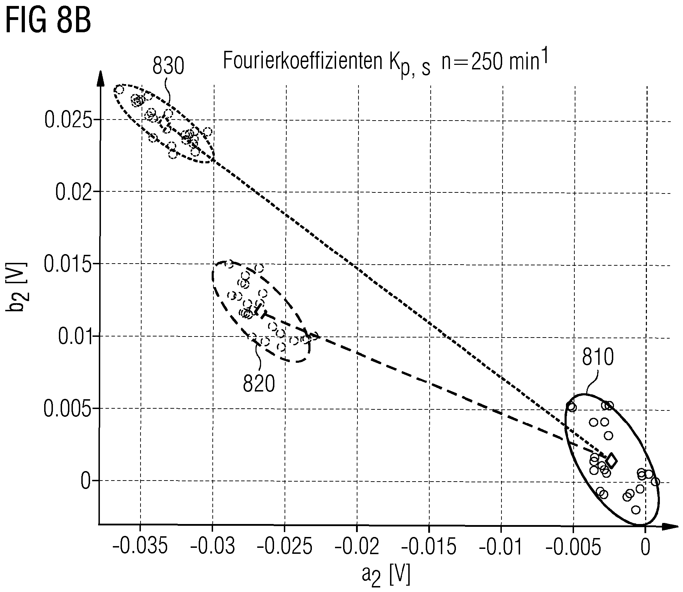

Fign. 8A und 8B zeigen exemplarische Ereigniswolken, welche sich aus einem Auftragen von Fourierkoeffizienten $b_1$ gegen $a_1$ für eine Vielzahl (erster) zeitlicher Verläufe ergeben. Die zugrundeliegenden erfassten zeitlichen Verläufe beziehen sich auf eine Umdrehungsgeschwindigkeit des elektrischen Antriebsmittels von 250 Umdrehungen pro Minute.

Die Fourierkoeffizienten $a_k$ bzw. $b_k$ mit $k \in \mathbb{N}$ können aus einem Anwenden einer Fouriertransformation (z.B. einer Fast Fourier Transformation (FFT)) auf einen (ersten) erfassten zeitlichen Verlauf einer Ausgangsspannung und/oder eines Ausgangsstroms des Stromrichters hervorgehen. Die Fourierkoeffizienten $a_k$ bzw. $b_k$ können derart normiert sein, dass sie gemäß Gleichung 1 zur Rekonstruktion des erfassten zeitlichen Verlaufs f(t) beitragen. Der zeitliche Verlauf f(t) kann durch eine Darstellung durch eine Fourierreihe daher wie folgt beschrieben werden:

$$f(t) \sim \frac{a_0}{2} + \sum_{k=1}^{\infty} \left( a_k \cos\left(\frac{2\pi}{T}kt\right) + b_k \sin\left(\frac{2\pi}{T}kt\right) \right)$$

Gleichung 1

In Gleichung 1 beschreibt $a_0$ einen statischen Beitrag zum Signal (z.B. einen Gleichanteil), T eine Periodendauer einer betrachteten Frequenzkomponente k zum Signal f(t).

Fig. 8A zeigt die betreffenden Ereigniswolken für eine erste Harmonische ($a_1$, $b_1$) des z.B. ersten erfassten zeitlichen Verlaufs einer Ausgangsspannung des Stromrichters.

Ereigniswolke 810 beschreibt dabei einen Zustand, zu welchem der Stromrichter als gesund anzusehen ist, d.h. zu welchem noch keine (wesentliche) Degradation des Stromrichters aufgetreten ist. Ereigniswolke 810 erstreckt sich über einen Bereich von -1 mV bis 2 mV für $a_1$ sowie über einen Bereich von -1 mV bis 0 mV für $b_1$.

Ereigniswolke 820 beschreibt einen Zustand, zu welchem eine Degradation des Stromrichters eingetreten ist. Die betreffende Ereigniswolke erstreckt sich vorliegend in einem Bereich von ca. -18 mV bis ca. -14 mV für $a_1$ sowie in einem Bereich von 11 mV bis 14 mV für $b_1$.

Schließlich stellt Ereigniswolke 830 den Fall dar, für welchen eine Degradation des Stromrichters eingetreten ist, jedoch eine Optimierung der Leitzeit zumindest eines Halbleitermoduls des Stromrichters vorgenommen wurde. Gegenüber Ereigniswolke 820 tritt Ereigniswolke 830 bei einer höheren Amplitude $a_1$ und $b_1$ auf, nämlich in einem Bereich von -15 mV bis -13 mV für $a_1$ sowie in einem Bereich von 17 mV bis 21 mV für $b_1$. Durch das Bestimmen einer Nullspannung und Betreiben des Stromrichters zumindest teilweise basierend auf der bestimmten Nullspannung kann so eine Verschiebung der Ereigniswolke 830 für die Fourierkoeffizienten $a_1$, $b_1$ hin zu größeren Amplituden erfolgen. Dies hat insbesondere den Vorteil, dass auch bereits kleine Signaturen (bzgl. einer Amplitude) einer möglichen Degradation, welche sich womöglich zunächst noch nicht von einem elektrischen/statistischen Rauschen abheben, dennoch frühzeitig detektiert werden können und damit frühzeitig Gegenmaßnahmen ergriffen werden können. Somit kann insgesamt ein verbessertes Bestimmen eines Degradationsfortschritts eines Stromrichters ermöglicht werden.

Fig. 8B zeigt hingegen exemplarische Ereigniswolken für eine zweite Harmonische ($a_2$, $b_2$) des z.B. ersten erfassten zeitlichen Verlaufs einer Ausgangsspannung des Stromrichters.

Ereigniswolke 810 stellt dabei erneut den als gesund anzusehenden Fall dar, d.h. einen Zustand des Stromrichters, zu welchem keine (wesentliche) Degradation eingetreten ist. Ereigniswolke 810 erstreckt sich dabei von -0,005 V bis zu 0 V für $a_2$ sowie von -0,003 V bis zu 0,006 V für $b_2$.

Ereigniswolke 820 stellt dabei den Fall dar, für welchen eine Degradation des Stromrichters eingetreten ist. Dies geht mit einer Verschiebung der Ereigniswolke 820 gegenüber Ereigniswolke 810 einher. Ereigniswolke 820 erstreckt sich dabei in einem Bereich von -0,03 V bis hin zu -0,024 V für $a_2$ sowie von 0,009 V bis zu 0,015 V für $b_2$.

Schließlich stellt Ereigniswolke 830 den Fall dar, für welchen eine Degradation des Stromrichters eingetreten ist, jedoch eine Optimierung der Leitzeit zumindest eines Halbleitermoduls des Stromrichters vorgenommen wurde. Entsprechend erstreckt sich Ereigniswolke 830 über einen Bereich von -0,038 V bis zu -0,03 V für $a_2$ sowie über einen Bereich von 0,023 V bis zu 0,027 V für $b_2$. Erneut zeigt sich, dass auch für den Anwendungsfall der zweiten Harmonischen, eine Verschiebung der Ereigniswolke 830 hin zu größeren Amplituden der Fourierkoeffizienten $a_2$ und $b_2$ erfolgte (analog zu den Ausführen zu Fig. 8A) und damit insgesamt eine verbesserte und präzisere Bestimmung eines Degradationsfortschritts des Stromrichters ermöglicht werden kann.

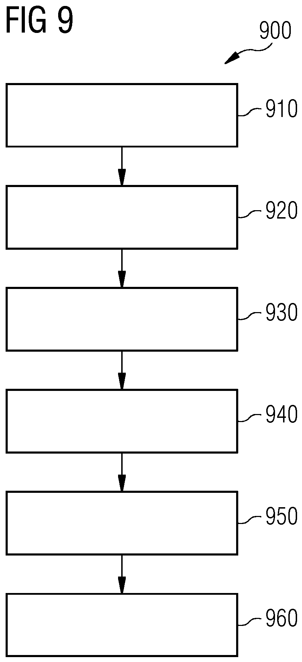

Fig. 9 zeigt ein Ablaufdiagramm eines exemplarischen Computer-implemenierten Verfahrens 900 zum Bestimmen eines Degradationsfortschritts eines Stromrichters gemäß einem Aspekt der vorliegenden Erfindung.

In Schritt 910 erfolgt ein Bestimmen einer ersten Nullspannung zum Zuführen an den Stromrichter, wobei die Nullspannung mit einer Verlängerung einer Leitzeit zumindest eines Halbleitermoduls der Drehstrombrückenschaltung assoziiert ist.

In Schritt 920 erfolgt ein Zuführen der ersten Nullspannung an den Stromrichter.

In Schritt 930 erfolgt ein Erfassen eines ersten zeitlichen Verlaufs einer Ausgangsspannung und/oder eines Ausgangsstroms des Stromrichters, wobei die Ausgangsspannung und/oder der Ausgangsstrom zum Zuführen an ein elektrisches Antriebsmittel bestimmt ist.

In Schritt 940 erfolgt ein Bestimmen einer Differenz zwischen einem von dem zeitlichen Verlauf abgeleiteten Wert mit einem Referenzwert.

In Schritt 950 erfolgt ein Bestimmen einer Regelspannung eines Reglers zum Zuführen an den Stromrichter, um die bestimmte Differenz zu minimieren.

In Schritt 960 erfolgt ein Bestimmen des Degradationsfortschritts zumindest teilweise basierend auf einem Vergleichen der Regelspannung mit einer Referenzregelspannung.

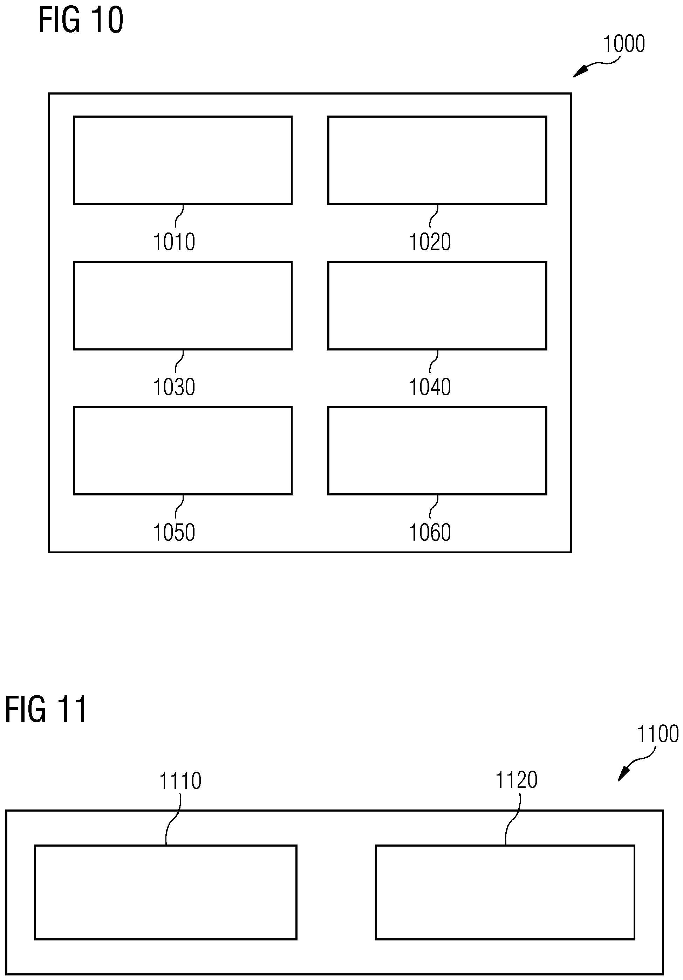

Fig. 10 zeigt eine exemplarische Computer-implementierte Vorrichtung 1000 zum Bestimmen eines Degradationsfortschritts eines Stromrichters gemäß einem Aspekt der vorliegenden Erfindung. Die Computer-implementierte Vorrichtung 1000 umfasst eine erste Bestimmungseinheit 1010, eine erste Zuführungseinheit 1020, eine Erfassungseinheit 1030, eine erste Bestimmungseinheit 1040, eine zweite Bestimmungseinheit 1050 sowie eine dritte Bestimmungseinheit 1060.

Erste Bestimmungseinheit 1010 ist konfiguriert zum Bestimmen einer ersten Nullspannung zum Zuführen an den Stromrichter, wobei die Nullspannung mit einer Verlängerung einer Leitzeit zumindest eines Halbleiterchips assoziiert ist.

Zuführungseinheit 1020 ist konfiguriert zum Zuführen der ersten Nullspannung an den Stromrichter.

Erfassungseinheit 1030 ist konfiguriert zum Erfassen eines ersten zeitlichen Verlaufs einer Ausgangsspannung und/oder eines Ausgangsstroms des Stromrichters, wobei die Ausgangsspannung und/oder der Ausgangsstrom zum Zuführen an ein elektrisches Antriebsmittel bestimmt ist.

Erste Bestimmungseinheit 1040 ist konfiguriert zum Bestimmen einer Differenz zwischen einem von dem zeitlichen Verlauf abgeleiteten Wert mit einem Referenzwert.

Zweite Bestimmungseinheit 1050 ist konfiguriert zum Bestimmen einer Regelspannung eines Reglers zum Zuführen an den Stromrichter, um die bestimmte Differenz zu minimieren.

Dritte Bestimmungseinheit 1060 ist konfiguriert zum Bestimmen des Degradationsfortschritts zumindest teilweise basierend auf einem Vergleichen der Regelspannung mit einer Referenzregelspannung.

Fig. 11 zeigt ein exemplarisches System 1100 zum Bestimmen eines Degradationsfortschritts eines Stromrichters gemäß einem Aspekt der vorliegenden Erfindung. Das System 1100 beinhaltet eine Computer-implementierte Vorrichtung 1110 und ein Computerprogrammprodukt 1120.

Die Computer-implementierte Vorrichtung 1110 kann konfiguriert sein, wie hierin beschrieben.

Das Computerprogrammprodukt 1120 kann konfiguriert sein, wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

**Patentansprüche**

1. Computer-implementiertes Verfahren (900) zum Bestimmen eines Degradationsfortschritts eines Stromrichters mit einer Drehstrombrückenschaltung mit einer positiven Halbbrücke und einer negativen Halbbrücke mit zumindest je einem Halbleiterchip, umfassend:

   Bestimmen (910) einer ersten Nullspannung zum Zuführen an den Stromrichter, wobei die Nullspannung mit einer Verlängerung einer Leitzeit zumindest eines Halbleiterchips der Drehstrombrückenschaltung assoziiert ist;
   Zuführen (920) der ersten Nullspannung an den Stromrichter;
   Erfassen (930) eines ersten zeitlichen Verlaufs einer Ausgangsspannung und/oder eines Ausgangsstroms des Stromrichters, wobei die Ausgangsspannung und/oder der Ausgangsstrom zum Zuführen an ein elektrisches Antriebsmittel bestimmt ist;
   Bestimmen (940) einer Differenz zwischen einem von dem zeitlichen Verlauf abgeleiteten Wert mit einem Referenzwert;
   Bestimmen (950) einer Regelspannung eines Reglers zum Zuführen an den Stromrichter, um die bestimmte Differenz zu minimieren;
   Bestimmen (960) des Degradationsfortschritts zumindest teilweise basierend auf einem Vergleichen der Regelspannung mit einer Referenzregelspannung.

2. Computer-implementiertes Verfahren nach Anspruch 1, ferner umfassend:

   Addieren der Regelspannung und der ersten Nullspannung vor Zuführen an den Stromrichter, um eine erste Summenspannung zu erhalten;
   Zuführen eines mit der ersten Summenspannung assoziierten Signals an den Stromrichter.

3. Computer-implementiertes Verfahren nach einem der Ansprüche 1 oder 2, ferner umfassend:
   Umwandeln der ersten Summenspannung in ein erstes Ansteuersignal für den zumindest einen Halbleiterchip zumindest teilweise basierend auf einem trägerbasiertem Modulationsverfahren oder einer Raumzeigermodulation.

4. Computer-implementiertes Verfahren nach einem der Ansprüche 1-3, wobei die Verlängerung der Leitzeit relativ zu einer Schaltperiode des Stromrichters erfolgt.

5. Computer-implementiertes Verfahren nach einem der Ansprüche 1-4, wobei sich die Verlängerung der Leitzeit auf alle Phasen des Stromrichters auswirkt.

6. Computer-implementiertes Verfahren nach einem der Ansprüche 1-5, wobei die erste Nullspannung positiv ist.

7. Computer-implementiertes Verfahren nach einem der Ansprüche 1-5, wobei die erste Nullspannung negativ ist.

8. Computer-implementiertes Verfahren nach einem der Ansprüche 1-7, ferner umfassend:
   Bestimmen einer zweiten Nullspannung, wenn bestimmt wird, dass der Degradationsfortschritt einen vorbestimmten Schwellenwert überschreitet, wobei die zweite Nullspannung mit einer Verringerung einer Leitzeit zumindest von einem Halbleiterchip assoziiert ist.

9. Computer-implementiertes Verfahren nach Anspruch 8, wobei das Bestimmen der zweiten Nullspannung zumindest teilweise basierend auf einem thermischen Modell des Stromrichters erfolgt.

10. Computer-implementiertes Verfahren nach einem der Ansprüche 8 oder 9, ferner umfassend:

    Addieren der zweiten Nullspannung zu der Regelspannung, um eine zweite Summenspannung zu erhalten;
    Umwandeln der zweiten Summenspannung in ein zweites Ansteuersignal für den zumindest einen Halbleiterchip zumindest teilweise basierend auf einem trägerbasiertem Modulationsverfahren oder einer Raumzeigermodulation;
    Zuführen des zweiten Ansteuersignals an den Stromrichter.

11. Computer-implementiertes Verfahren nach einem der Ansprüche 8-10, wobei die Verringerung der Leitzeit relativ zu einer Schaltfrequenz oder einer Grundschwingungsperiode des Stromrichters erfolgt.

12. Computerprogramm, umfassend Befehle, die bei der Ausführung des Programms durch einen Computer diesen veranlassen, das Verfahren nach einem der Ansprüche 1-11 auszuführen.

13. Computer-implementierte Vorrichtung (1000) zum Bestimmen eines Degradationsfortschritts eines Stromrichters mit einer Drehstrombrückenschaltung umfassend eine positive Halbbrücke und eine negative Halbbrücke mit zumindest je einem Halbleiterchip, umfassend:

eine erste Bestimmungseinheit (1010) zum Bestimmen einer ersten Nullspannung zum Zuführen an den Stromrichter, wobei die Nullspannung mit einer Verlängerung einer Leitzeit des zumindest einen Halbleiterchips assoziiert ist;
eine Zuführungseinheit (1020) zum Zuführen der ersten Nullspannung an den Stromrichter;
eine Erfassungseinheit (1030) zum Erfassen eines ersten zeitlichen Verlaufs einer Ausgangsspannung und/oder eines Ausgangsstroms des Stromrichters, wobei die Ausgangsspannung und/oder der Ausgangsstrom zum Zuführen an ein elektrisches Antriebsmittel bestimmt ist;
eine erste Bestimmungseinheit (1040) zum Bestimmen einer Differenz zwischen einem von dem zeitlichen Verlauf abgeleiteten Wert mit einem Referenzwert;
eine zweite Bestimmungseinheit (1050) zum Bestimmen einer Regelspannung eines Reglers zum Zuführen an den Stromrichter, um die bestimmte Differenz zu minimieren;
eine dritte Bestimmungseinheit (1060) zum Bestimmen des Degradationsfortschritts zumindest teilweise basierend auf einem Vergleichen der Regelspannung mit einer Referenzregelspannung.

14. Computer-implementierte Vorrichtung nach Anspruch 13, ferner umfassend:

eine Ausführungseinheit zum Ausführen des Computerprogrammprodukts nach Anspruch 12; und/oder
eine weitere Ausführungseinheit zum Ausführen des Verfahrens nach einem der Ansprüche 1-11.

15. System (1100) zum Bestimmen eines Degradationsfortschritts eines Stromrichters, umfassend:

Computerprogrammprodukt (1110) nach Anspruch 12; und
Computer-implementierte Vorrichtung (1120) nach einem der Ansprüche 13 oder 14.

## FIG 1A

## FIG 1B

## FIG 1C

# FIG 2

**FIG 3**

**FIG 4**

FIG 5

EP 4 701 066 A1

# FIG 6

## FIG 7A

### Verlauf Nullspannung

## FIG 7B

### Phasenspannungen mit additiver Nullkomponente

# FIG 8A

Fourierkoeffizienten $K_{p, s}$ n=250 min$^{1}$

FIG 8B

Fourierkoeffizienten $K_{p, s}$  $n = 250$ $min^{1}$

FIG 9

FIG 10

1000

1010

1020

1030

1040

1050

1060

FIG 11

1100

1110

1120

Europäisches Patentamt

European Patent Office

Office européen des brevets

## EUROPÄISCHER RECHERCHENBERICHT

**Nummer der Anmeldung**

EP 24 19 5580

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LLEDO-PONSATI TOMAS ET AL: "Reliability Analysis of a 3-leg 4-wire Inverter under Unbalanced Loads and Harmonic Injection", 2019 20TH WORKSHOP ON CONTROL AND MODELING FOR POWER ELECTRONICS (COMPEL), IEEE, 17. Juni 2019 (2019-06-17), Seiten 1-8, XP033581254, DOI: 10.1109/COMPEL.2019.8769662 [gefunden am 2019-07-22] * Unterabschnitt II. SECTION I: PLATFORM DESCRIPTION; Unterabschnitt II. A. Experimental results; Unterabschnitt III. C. Analysis of the effect of harmonics; Unterabschnitt III. D. Analysis of DC-bias or subharmonics; Unterabschnitt IV. C. Analysis of the effect of harmonics; Abbildungen 1,,3,4; Tabellen 1,8,13 * | 1-15 | INV. H02M7/5387 H02M7/5395 H02M1/00 H02M1/32 H02P27/08 H02P29/028 |
| A | ----- WO 2023/228231 A1 (MITSUBISHI ELECTRIC CORP [JP]) 30. November 2023 (2023-11-30) * Zusammenfassung; Abbildung 1 * ----- | 1-15 | |
| A | DE 100 65 237 A1 (BOSCH GMBH ROBERT [DE]; ZF LENKSYSTEME GMBH [DE]) 18. Juli 2002 (2002-07-18) * Absätze [0063], [0066]; Abbildungen 4-6 * ----- -/-- | 1-15 | **RECHERCHIERTE SACHGEBIETE (IPC)** H02M H02P |

Der vorliegende Recherchenbericht wurde für alle Patentansprüche erstellt

| Recherchenort | Abschlußdatum der Recherche | Prüfer |
|---|---|---|
| Den Haag | 23. Januar 2025 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)

Europäisches Patentamt

European Patent Office

Office européen des brevets

## EUROPÄISCHER RECHERCHENBERICHT

**Nummer der Anmeldung**

EP 24 19 5580

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | LIXIANG WEI ET AL: "Analysis of Power-Cycling Capability of IGBT Modules in a Conventional Matrix Converter", IEEE TRANSACTIONS ON INDUSTRY APPLICATIONS, IEEE SERVICE CENTER, PISCATAWAY, NJ, US, Bd. 45, Nr. 4, 1. Juli 2009 (2009-07-01), Seiten 1443-1451, XP011261607, ISSN: 0093-9994 * Unterabschnitt III. B. Duty-Ratio d u, d v, and d w Calculations; Abbildungen 3,7,8 * ----- | 1-15 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| Den Haag | 23. Januar 2025 | Kanelis, Konstantin |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes Dokument

EPO FORM 1503 03.82 (P04C03)

**Seite 2 von 2**

EP 4 701 066 A1

**ANHANG ZUM EUROPÄISCHEN RECHERCHENBERICHT**
**ÜBER DIE EUROPÄISCHE PATENTANMELDUNG NR.**

EP 24 19 5580

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-01-2025

| Im Recherchenbericht angeführtes Patentdokument | Datum der Veröffentlichung | Mitglied(er) der Patentfamilie | Datum der Veröffentlichung |
|---|---|---|---|
| WO 2023228231 A1 | 30-11-2023 | GB 2632205 A | 29-01-2025 |
| | | JP WO2023228231 A1 | 30-11-2023 |
| | | WO 2023228231 A1 | 30-11-2023 |
| DE 10065237 A1 | 18-07-2002 | KEINE | |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CIAPPA, M.** Selected failure mechanisms of modern power modules. *Microelectronics Reliability*, 2002, vol. 42 (4-5)